Europäisches Patentamt

European Patent Office

Office européen des brevets

(11) Numéro de publication : **0 475 246 B1**

(12) **FASCICULE DE BREVET EUROPEEN**

(19)

(45) Date de publication du fascicule du brevet :
**17.08.94 Bulletin 94/33**

(21) Numéro de dépôt : **91114833.6**

(22) Date de dépôt : **03.09.91**

(51) Int. Cl.⁵ : **G01M 3/20**

(54) **Détecteur de fuite haut flux à trois filtres moléculaires.**

(30) Priorité : **05.09.90 FR 9011027**

(43) Date de publication de la demande :
**18.03.92 Bulletin 92/12**

(45) Mention de la délivrance du brevet :
**17.08.94 Bulletin 94/33**

(84) Etats contractants désignés :
**AT BE CH DE DK ES FR GB GR IT LI LU NL SE**

(56) Documents cités :
**EP-A- 0 283 543**
**EP-A- 0 344 345**
**GB-A- 2 190 204**
**US-A- 3 591 827**

(73) Titulaire : **ALCATEL CIT**
**12 Rue de la Baume**
**F-75008 Paris (FR)**

(72) Inventeur : **Tallon, Jacques**
**1 place Saint François**
**F-74000 Annecy (FR)**

(74) Mandataire : **Weinmiller, Jürgen et al**
**Lennéstrasse 9**
**Postfach 24**
**D-82336 Feldafing (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

EP 0 475 246 B1

## Description

## DETECTEUR DE FUITE HAUT FLUX A TROIS FILTRES MOLECULAIRES

La présente invention concerne un détecteur de fuites à hélium et une méthode de mise en oeuvre du dispositif.

On connaît bien les détecteurs de fuite à hélium, qui permettent de contrôler l'étanchéité d'une pièce ou d'un réservoir. On rappelle que la méthode d'utilisation d'un détecteur de fuites à hélium pour le contrôle de l'étanchéité d'une pièce est la suivante:
- on obture tous les orifices de la pièce sauf un,
- on raccorde l'orifice laissé libre à un détecteur d'hélium,
- on évacue l'air de la pièce,
- on asperge la pièce d'hélium utilisé comme gaz traceur,
- on localise une fissure éventuelle par apparition d'hélium détecté par le détecteur et on déduit la taille de la fissure par la mesure du flux d'hélium.

Pour pouvoir, avec le même appareil, contrôler l'étanchéité de pièces de tailles diverses, allant par exemple du circuit intégré au réservoir de plusieurs centaines de litres, il est nécessaire que le détecteur satisfasse à un certains nombres d'exigences touchant à la sensibilité, à la vitesse de pompage de l'hélium, au phénomène dit de "mémoire hélium" et à la pollution, en particulier par les vapeurs d'huile.

Ces exigences sont examinées successivement dans ce qui suit.

### a. Sensibilité

Le détecteur doit être capable de mesurer des flux faibles de l'ordre de $10^{-11}$ mbar.l/s et de les mesurer en présence d'un flux important d'azote, de vapeurs d'eau et d'huile pouvant atteindre $10^{-1}$ mbar.l/s. Ceci exige en particulier que le détecteur soit capable d'abaisser rapidement la pression partielle d'hélium dans la pièce à contrôler, pression due à l'hélium contenu dans l'air, à une valeur plus faible que celle donnée par le flux minimal désiré indiqué ci-dessus. Le détecteur doit également être capable de mesurer un flux d'hélium dû à une fuite importante, par exemple de l'ordre de 100 mbar.l/s.

### b. Vitesse de pompage de l'hélium

Pour pouvoir fournir rapidement (c'est-à-dire en quelques secondes), un signal électrique lors d'un contrôle d'étanchéité d'une pièce de volume de 200 litres par exemple, le détecteur doit avoir une grande vitesse de pompage de l'air et une grande vitesse de pompage de l'hélium à sa bride d'entrée, par exemple de l'ordre de 20 litres/S.

### c. Mémoire d'hélium

Le détecteur qui vient de mesurer une grosse fuite et a donc mesuré un flux d'hélium important peut conserver dans ses organes (pompes, tuyauteries, etc...) des molécules d'hélium qui viendront fausser une mesure ultérieure correspondant à un flux d'hélium plus faible. C'est ce qu'on appelle le phénomène de 'mémoire d'hélium". Un détecteur à haute sensibilité doit être bien protégé contre de tels phénomènes.

### d. Pollution par les vapeurs d'huile

Pour éviter une telle pollution, on a longtemps utilisé un piège à azote liquide; cette technique à été abandonnée car elle entraîne des contraintes trop lourdes pour les applications industrielles. Il reste néanmoins nécessaire de protéger le détecteur et les pièces à contrôler des vapeurs d'huile d'origine interne (pompes à palettes) ou externe.

Un but de la présente invention est de réaliser un détecteur qui résolve les problèmes techniques précités, ce que ne sait faire aucun des détecteurs de l'art antérieur.

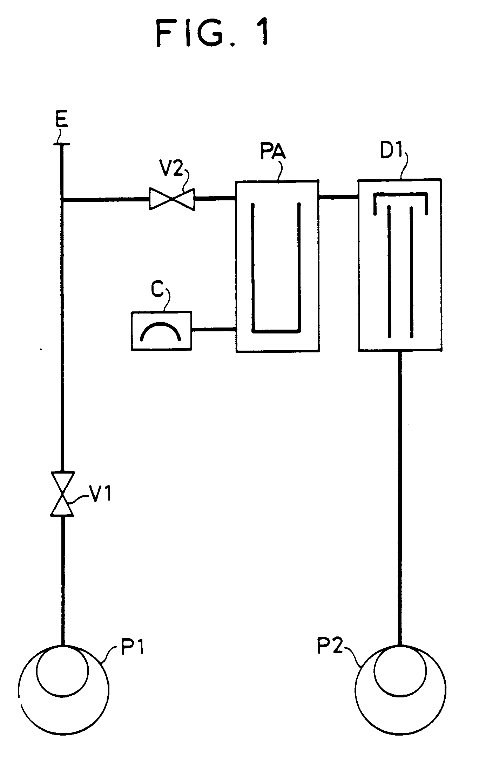

Un premier détecteur de l'art antérieur est schématisé dans la figure 1.

La lettre E désigne l'entrée du détecteur à laquelle est raccordée la pièce à contrôler. Le détecteur comprend une première pompe à palettes P1 reliée à l'entrée E par une première vanne V1, et une pompe à diffusion D1, reliée à l'entrée E à travers un piège à azote liquide PA et une seconde vanne V2. Une seconde pompe à palette P2 sert de pompe primaire à la pompe D1. Un spectromètre C est relié au piège à azote liquide PA . Un tel détecteur permet d'obtenir une grande sensibilité lorsque la vanne V1 est fermée et la vanne V2 ouverte, mais ceci exige une faible vitesse de pompage hélium au niveau de la cellule C, d'où une faible vitesse de pompage hélium à la bride d'entrée E. Dans ces conditions, le flux d'air maximal absorbable au niveau du spectromètre est limité à environ $10^{-3}$ mbar.l/s.

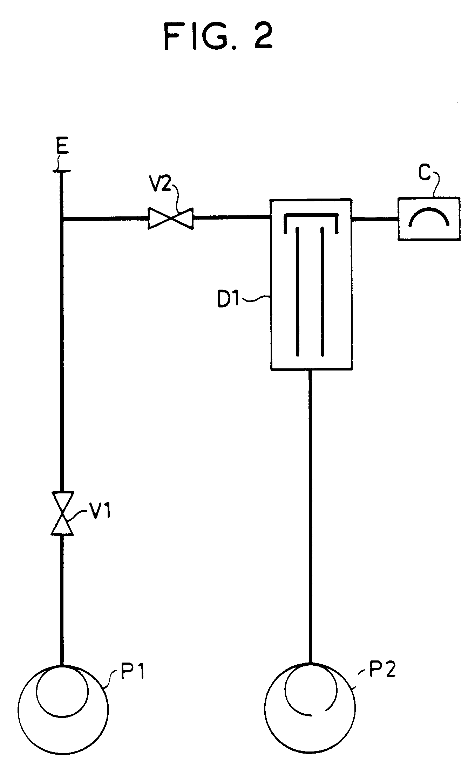

La figure 2 représente une variante de réalisation du schéma de la figure 1, dans lequel le piège à azote liquide PA a été supprimé et le spectromètre relié à la pompe à diffusion D1. Ce détecteur présente les mêmes inconvénients que celui de la figure 1, aggravés par le fait que l'ouverture de la vanne V2, donc la vitesse de pompage en E, est limitée par le dégazage de vapeur d'eau venant de la pièce à contrôler, limitation qui n'existait pas dans le détecteur de la figure 1 en raison de la présence du piège à azote liquide.

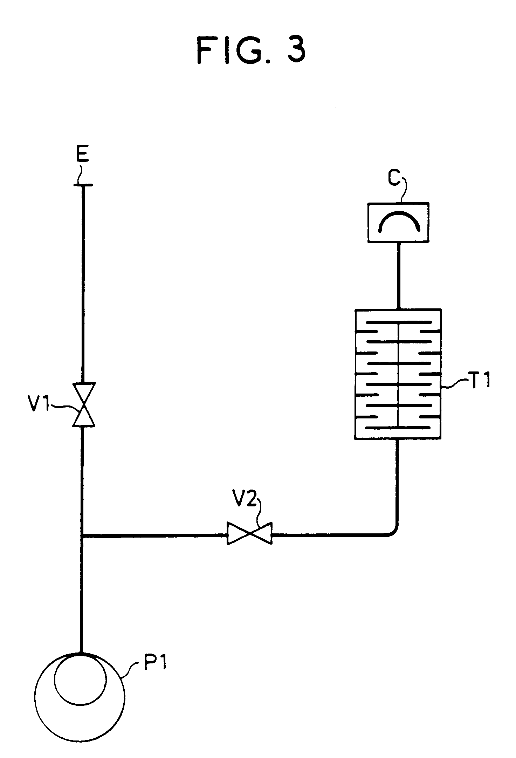

La figure 3 illustre un détecteur qui fait appel à une technique connue sous la dénomination de 'contre courant". Le détecteur comprend une pompe à palette P1 reliée à la bride d'entrée E par une vanne V1 et une pompe moléculaire T1, reliée par une vanne V2 à la canalisation reliant la pompe P1 et la vanne V1.

Le spectromètre est relié à la partie basse pression de la pompe moléculaire. L'hélium remonte jusqu'à la cellule à contre courant du flux traversant la pompe moléculaire T1, d'où le nom donné à cette technique. La sensibilité d'un tel appareil peut être par exemple de l'ordre de $10^{-11}$ mbar.l/s, à condition de réduire la vitesse de pompage hélium à l'aspiration de la pompe P1, donc aussi à l'entrée.

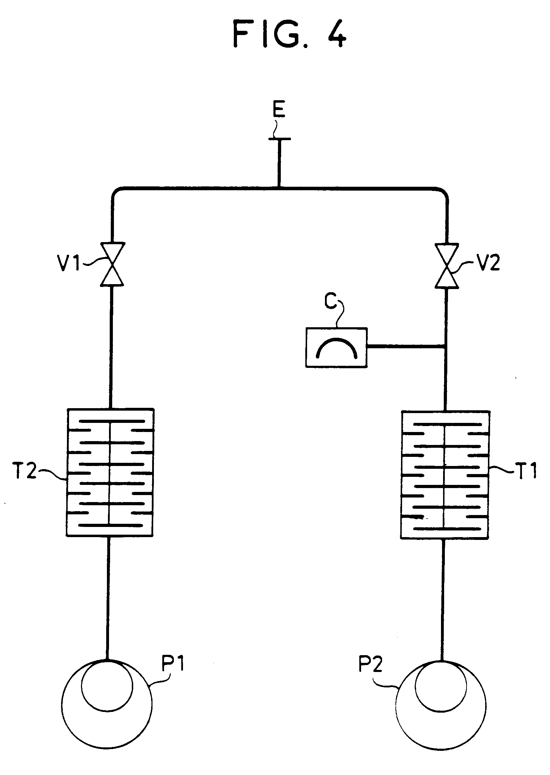

La figure 4 illustre une autre variante de détecteur de l'art antérieur, notamment décrit dans la brochure ALCATEL ASM 151 T2. Il comprend deux pompes moléculaires T1 et T2 reliées respectivement par des vannes V2 et V1 à la bride d'entrée E du détecteur, et munies respectivement de pompes primaires à palettes P1 et P2. LE spectromètre C est relié entre la vanne V2 et la pompe moléculaire T1. Ce schéma permet d'obtenir une grande sensibilité lorsque V1 est fermée et V2 ouverte, une grande vitesse de pompage air dans la phase de prévidage grâce à T2, mais ne permet pas, dans les autres cas, d'obtenir par T1 à la fois une grande vitesse de pompage en E et une grande sensibilité.

On voit que ces dispositifs de l'art antérieur ne peuvent concilier les deux exigences qui apparaissent comme contradictoires, de grande sensibilité et grande vitesse de pompage. Ceci résulte du fait que la même pompe (D1,T1 pour les schémas des figures 1, 2 et 4 et P1 pour le schéma de la figure 3) doit avoir une grande vitesse de pompage pour que la vitesse de pompage en E soit grande et une faible vitesse de pompage pour que la sensibilité soit grande. Ces exigences sont manifestement contradictoires.

Un but de la présente invention est de réaliser un détecteur à hélium à usage universel, c'est-à-dire pouvant être utilisé pour le contrôle de toutes les pièces industrielles, pouvant atteindre quelques centaines de litres, et qui soit capable de mesurer des fuites d'hélium très faibles en présence de flux de vapeurs importants; le détecteur doit par ailleurs posséder une grande vitesse de pompage pour l'air comme pour l'hélium, avoir une "mémoire d'hélium" faible et être bien protégé contre les pollutions malgré l'absence de piège à azote.

Ces objectifs sont atteints par le détecteur de fuite à hélium de l'invention, qui est caractérisé en ce qu'il comprend une première pompe moléculaire à grande vitesse de pompage, dont l'entrée basse pression est reliée à une entrée du détecteur et dont la sortie haute pression est reliée, soit à un ensemble de prévidage comprenant une première vanne et une première pompe primaire, soit à un ensemble de mesure de pression d'hélium comprenant :

- un premier filtre sélectif constitué par une pompe moléculaire à faible vitesse de pompage et faible taux de compression,
- un second filtre sélectif constitué par une pompe moléculaire à faible vitesse de pompage et à fort taux de compression,

lesdits premier et second filtres étant reliés à une extrémité d'une seconde vanne dont l'autre extrémité est reliée entre la pompe moléculaire et la première vanne, ledit détecteur comprenant en outre un troisième filtre sélectif en parallèle sur ladite seconde vanne, ledit filtre laissant passer l'hélium en interdisant le passage de l'air ou des vapeurs.

De préférence, la première pompe moléculaire à grande vitesse de pompage est une pompe turbomoléculaire ou une pompe Holweck; le premier filtre sélectif est une pompe turbomoléculaire ou une pompe Holweck; le deuxième filtre moléculaire est une pompe turbomoléculaire ou une pompe Holweck.

Avantageusement, ledit troisième filtre est une membrane, par exemple en polyamide.

L'invention sera bien comprise à la lumière de la description donnée ci-après d'un mode de réalisation de l'invention, en référence au dessin annexé, dans lequel:

- les figures 1 à 4 sont des schémas de détecteurs à hélium selon l'art antérieur,
- la figure 5 est un schéma d'un détecteur selon la présente invention.

Les figures 1 à 4 ont déjà été commentées et on n'y reviendra pas.

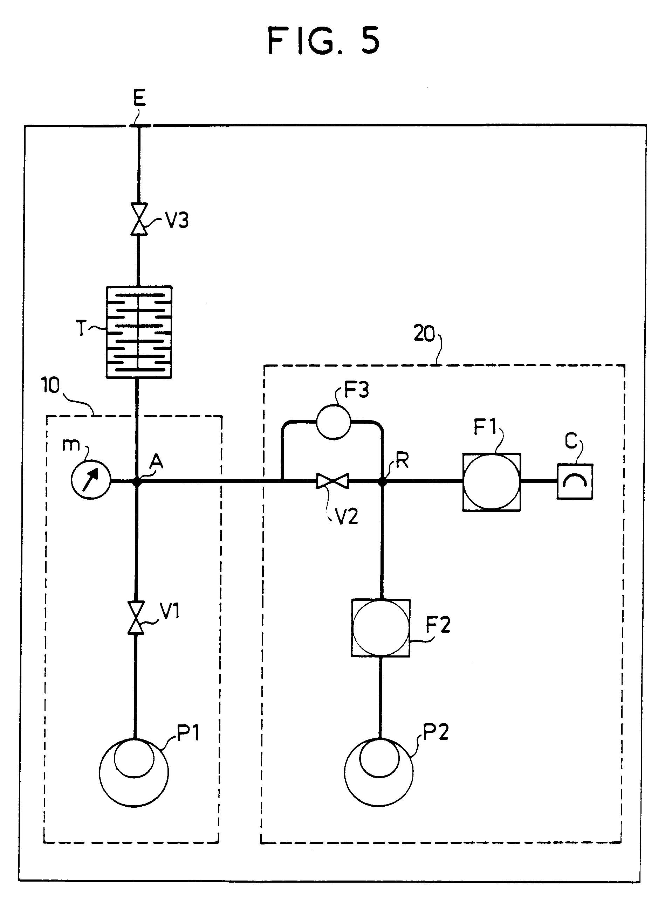

Dans la figure 5 on a utilisé, pour les éléments jouant le même rôle, les mêmes références que dans les figures 1 à 4. La lettre E désigne la bride d'entrée du détecteur de fuites. Le détecteur de l'invention est représenté délimité par un rectangle en traits pleins. Il comprend un ensemble de prévidage délimité par le rectangle en traits tiretés 10 et un ensemble de mesure délimité par le rectangle en tiretés 20. L'entrée du détecteur est relié, via une vanne V3, à une première pompe moléculaire T. Cette pompe joue un double rôle.

## 1. Rôle dans la fonction prévidage

La première phase d'un contrôle d'étanchéité à l'hélium est l'évacuation de l'air de la pièce à contrôler, habituellement réalisé par une pompe à palettes. Selon l'invention, l'air est évacué par la pompe moléculaire T, qui peut être une pompe turbomoléculaire ou une pompe Holweck. L'air évacué par la pompe T après passage par la vanne V3 est refoulé à travers l'ensemble de prévidage 10 qui comprend une vanne V1, une pompe primaire P1, pouvant être une pompe à palettes, et un manomètre m.

La pompe T doit avoir une grande vitesse de pompage pour permettre une évacuation rapide de l'air de la pièce à contrôler (exigence du point b ci-dessus).

La pompe T doit avoir une pression limite faible ($10^{-5}$ mbar) pour l'air et donc pour l'hélium contenu dans l'air (exigence du point a ci-dessus).

La pompe T doit avoir enfin un fort taux de compression pour empêcher les vapeurs d'huile de la pompe P1 de polluer la pièce à contrôler (c'est l'exigence du point d ci-dessus).

## 2. Rôle dans la fonction mesure

A la fin de la phase de prévidage, la pression dans la pièce à contrôler a été fortement abaissée par la pompe T (inférieure à un millième de millibar). On ferme la vanne V1. La deuxième phase du contrôle peut commencer. La pompe T est mise en communication avec l'ensemble de mesure 20 par ouverture d'une vanne V2 dont une extrémité est reliée à un point A situé entre la pompe T et la vanne V1 et dont l'extrémité R est reliée aux entrées respectives de deux filtres sélectifs F1 et F2.

Le filtre F2 est une pompe moléculaire qui est pompée par une pompe primaire P2.

Le filtre F1 est une pompe moléculaire fonctionnant en contrecourant et raccordée à une cellule spectromètrique C.

Un troisième filtre sélectif F3, dont la nature sera expliquée plus loin, est en parallèle sur la vanne V2.

A l'ouverture de la vanne V2, l'hélium refoulé par la pompe T à grande vitesse de pompage traverse F2, pompe moléculaire jouant le rôle de filtre, puis est aspiré par la pompe primaire P2 qui peut être une pompe à palettes.

La performance du pompage de la pompe F2 a peu d'importance: sa vitesse de pompage peut être équivalente à celle de la pompe P2 (de l'ordre de quelques litres/s); mais le taux de compression K2, pour l'hélium, de la pompe F2 doit être élevé (de l'ordre de 1000 par exemple) et donc aussi pour les autres gaz ou vapeurs. De cette manière, lorsqu'un flux d'hélium important (0,1 mbar.l/s par exemple) est aspiré par la pompe T pour aboutir dans la pompe P2, la rétrodiffusion de l'hélium de la pompe P2 (accumulé dans cette pompe) vers la cellule C est réduite en raison du taux de compression élevé de la pompe F2 (c'est l'exigence du point c ci-dessus). Grâce encore à la valeur élevée du taux K2, la pompe P2 joue aussi le rôle de filtre vis-à-vis des vapeurs d'huile de la pompe P2 qu'elle empêche de remonter vers le point R et de là, vers la cellule C (c'est l'exigence du point c ci-dessus).

Le filtre F2 peut être réalisé avec tout système de pompage ayant un fort taux de compression hélium et qui ne soit pas une source de pollution. Toute pompe mécanique moléculaire peut être envisagée, en particulier une pompe Holweck. On évitera d'utiliser une pompe à diffusion de vapeur d'huile qui a un taux de compression hélium suffisant, mais qui entraînerait des phénomènes de pollution. La mesure de la quantité d'hélium circulant de E à la pompe P2 est réalisée par une mesure de pression partielle d'hélium en R par le manomètre constitué par l'ensemble comprenant le filtre F1, pompe moléculaire travaillant à contrecourant et le spectromètre C.

Comme pour la pompe F2, la performance de pompage de la pompe F1 est peu importante (il suffit de quelques litres/s), mais contrairement à la pompe F2, son taux de compression en hélium K1 doit être faible (de l'ordre de 50 par exemple), de manière que la pression d'hélium en R ne soit pas trop affaiblie en C par le taux de compression K1 (c'est l'exigence du point a ci-dessus).
On a en effet la relation:

(pression en C) = (pression en R)/ K1

La pompe F1 peut être de même nature que la pompe F2, à condition que son taux de compression hélium soit faible. Une pompe mécanique de type Holweck ou turbomoléculaire est bien adaptée. On évitera la pompe à diffusion de vapeur d'huile qui pourrait convenir mais viendrait ajouter des phénomènes de pollution.

La conception du détecteur de l'invention permet de résoudre les problèmes soulevés par les points a à d exposés ci-dessus. La contradiction classique existant entre vitesse de pompage élevée à l'entrée et sensibilité élevée est éliminée car les performances sont traitées indépendamment.

La vitesse de pompage élevée à l'entrée est obtenue par une vitesse de pompage élevée de la pompe T.

La grande sensibilité est obtenue par une vitesse de pompage faible de la pompe F2 avec un taux de compression faible de la pompe F1.

La grande sensibilité est également permise par la possibilité d'abaisser rapidement la pression d'air et d'hélium à l'entrée E grâce à la vitesse élevée de la pompe T qui n'est plus limitée par des considérations de sensibilités.

Ainsi conçu, le détecteur de l'invention peut déceler des flux d'hélium couvrant 10 décades: de $10^{-11}$ mbar.l/s à 0,1 mbar.l/s.

Pour augmenter encore la "dynamique" de l'appareil et atteindre 15 décades de mesure, un manomètre m, placé en A au refoulement de la pompe T, interdit l'ouverture de la vanne V2 si la pression en A ne s'abaisse pas au-dessous de 0,1 mbar. La vanne V1 reste alors ouverte et l'on mesure, grâce à un troisième filtre F3 en parallèle sur la vanne V2, la pression d'hélium en A. Ce filtre doit être capable de permettre une mesure de pression partielle d'hélium de $10^{-3}$ mbar alors que la pression totale de l'air est au même moment de 1000 mbars. C'est-à-dire qu'il doit permettre à l'hélium de passer tout en interdisant le passage de l'air ou des vapeurs.

Le filtre F3 peut être réalisé simplement par une membrane de polyamide.

## Revendications

1. Détecteur de fuite à hélium caractérisé en ce qu'il comprend une première pompe moléculaire (T) à grande vitesse de pompage, dont l'entrée basse pression est reliée à une entrée (E) du détecteur et dont la sortie haute pression est reliée, soit à un ensemble de prévidage (10) comprenant une première vanne (V1) et une première pompe primaire (P1), soit à un ensemble (20) de mesure de pression d'hélium comprenant :
- un premier filtre sélectif (F1) constitué par une pompe moléculaire à faible vitesse de pompage et faible taux de compression,
- un second filtre sélectif (F2) constitué par une pompe moléculaire à faible vitesse de pompage et à fort taux de compression,

lesdits premier et second filtres étant reliés à une extrémité d'une seconde vanne (V2) dont l'autre extrémité est reliée entre la pompe moléculaire et la première vanne (V1), ledit détecteur comprenant en outre un troisième filtre sélectif (F3) en parallèle sur ladite seconde vanne (V2), ledit filtre laissant passer l'hélium en interdisant le passage de l'air ou des vapeurs.

2. Détecteur selon la revendication 1, caractérisé en ce que la première pompe moléculaire (T) à grande vitesse de pompage est une pompe turbomoléculaire ou une pompe Holweck.

3. Détecteur selon l'une des revendications 1 et 2, caractérisé en ce que le premier filtre sélectif (F1) est une pompe turbomoléculaire ou une pompe Holweck.

4. Pompe selon l'une des revendications 1 à 3, caractérisé en ce que le deuxième filtre moléculaire (F2) est une pompe turbomoléculaire ou une pompe Holweck.

5. Détecteur selon l'une des revendications 1 à 4, caractérisé en ce que ledit troisième filtre (F3) est une membrane, par exemple en polyamide.

**Patentansprüche**

1. Heliumleckdetektor, dadurch gekennzeichnet, daß er eine erste Molekularpumpe (T) hoher Pumpgeschwindigkeit aufweist, deren Niederdruckeingang mit einem Eingang (E) des Detektors verbunden ist und deren Hochdruckausgang entweder an eine Vorpumpeneinheit (10), bestehend aus einem ersten Ventil (V1) und einer ersten Primärpumpe (P1), oder an eine Einheit (20) zum Messen des Heliumdrucks angeschlossen ist, die aufweist:
- ein erstes selektives Filter (F1), bestehend aus einer Molekularpumpe mit niedriger Pumpgeschwindigkeit und niedrigem Verdichtungsverhältnis,
- ein zweites selektives Filter (F2), bestehend aus einer Molekularpumpe mit niedriger Pumpgeschwindigkeit und hohem Verdichtungsverhältnis,

wobei das erste und das zweite Filter mit einem Anschluß eines zweiten Ventils (V2) verbunden sind, dessen anderer Anschluß zwischen der Molekularpumpe und dem ersten Ventil (V1) angeschlossen ist und wobei der Detektor weiter parallel zum zweiten Ventil (V2) ein drittes selektives Filter (F3) aufweist, das Helium durchläßt, aber den Durchtritt von Luft und Dämpfen sperrt.

2. Detektor nach Anspruch 1, dadurch gekennzeichnet, daß die erste Molekularpumpe (T) hoher Pumpgeschwindigkeit eine Turbomolekularpumpe oder eine Holweck-Pumpe ist.

3. Detektor nach Anspruch 1 oder 2, dadurch gekennzeichnet, daß das erste selektive Filter (F1) eine Turbomolekularpumpe oder eine Holweck-Pumpe ist.

4. Pumpe nach einem der Ansprüche 1 bis 3, dadurch gekennzeichnet, daß das zweite Molekularfilter (F2) eine Turbomolekularpumpe oder eine Holweck-Pumpe ist.

5. Detektor nach einem der Ansprüche 1 bis 4, dadurch gekennzeichnet, daß das dritte Filter (F3) eine Membran beispielsweise aus Polyamid ist.

**Claims**

1. A helium leak detector characterized in that it comprises a first molecular pump (T) having a high pumping speed, having its low-pressure outlet connected to an inlet (E) of the detector, and having its high-pressure outlet connected either to a pre-vacuum assembly (10) comprising a first valve (V1) and a first primary pump (P1), or to a measurement assembly (20) for measuring helium pressure and comprising:
a first selective filter (F1) constituted by a molecular pump having a low pumping speed and a low compression ratio; and
a second selective filter (F2) constituted by a molecular pump having a low pumping speed and a high compression ratio;
said first and second filters being connected to one end of a second valve (V2) having its other end connected between the molecular pump and the first valve (V1), said detector further comprising a third selective filter (F3) in parallel with said second valve (V2), said third filter allowing helium to pass therethrough and preventing air or vapor from passing therethrough.

2. A detector according to claim 1, characterized in that the first molecular pump (T) having a high pumping speed is a turbomolecular pump or a Holweck pump.

3. A detector according to claim 1 or 2, characterized in that the first selective filter (F1) is a turbomolecular pump or a Holweck pump.

4. A detector according to any one of claims 1 to 3, characterized in that the second molecular filter (F2) is a turbomolecular pump or a Holweck pump.

5. A detector according to any one of claims 1 to 4, characterized in that said third filter (F3) is a membrane, e.g. made of polyamide.

# FIG. 1

EP 0 475 246 B1

# FIG. 2

# FIG. 3

# FIG. 4

# FIG. 5